(19) Europäisches Patentamt
European Patent Office
Office européen des brevets

(11) **EP 3 394 633 B1**

(12) **EUROPEAN PATENT SPECIFICATION**

(45) Date of publication and mention
of the grant of the patent:
**05.07.2023 Bulletin 2023/27**

(21) Application number: **16816674.2**

(22) Date of filing: **19.12.2016**

(51) International Patent Classification (IPC):
**G01R 5/16** *(2006.01)* **G01S 7/00** *(2006.01)*
**G01S 13/931** *(2020.01)* **G01S 7/02** *(2006.01)*

(52) Cooperative Patent Classification (CPC):
**G01S 5/16; G01S 7/003; G01S 7/0236;**
**G01S 13/931;** G01S 2013/9316; G01S 2013/9323;
G01S 2013/9324; H04B 7/0617

(86) International application number:
**PCT/EP2016/081740**

(87) International publication number:
**WO 2017/108688 (29.06.2017 Gazette 2017/26)**

(54) **DEVICE IN A CAR FOR COMMUNICATING WITH AT LEAST ONE NEIGHBORING DEVICE, CORRESPONDING METHOD AND COMPUTER PROGRAM PRODUCT.**

VORRICHTUNG IN EINEM KRAFTFAHRZEUG ZUR KOMMUNIKATION MIT MINDESTENS EINER BENACHBARTEN VORRICHTUNG, ENTSPRECHENDES VERFAHREN UND COMPUTERPROGRAMMPRODUKT.

DISPOSITIF DANS UNE VOITURE POUR COMMUNIQUER AVEC AU MOINS UN DISPOSITIF VOISIN, PROCÉDÉ ET PRODUIT PROGRAMME D'ORDINATEUR CORRESPONDANTS.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2015 EP 15201470**

(43) Date of publication of application:
**31.10.2018 Bulletin 2018/44**

(73) Proprietors:
• **Koninklijke KPN N.V.**
**3072 AP Rotterdam (NL)**
• **Nederlandse Organisatie voor Toegepast-Natuurwetenschappelijk Onderzoek (TNO)**
**2595 DA Den Haag (NL)**

(72) Inventors:
• **CRONIE, Harm**
**1040 Echallens (CH)**
• **LAWRENSON, Matthew**
**1030 Bussigny (CH)**

• **NOLAN, Julian**
**1009 Pully (CH)**
• **NORP, Antonius**
**2584 EN The Hague (NL)**

(74) Representative: **Wuyts, Koenraad Maria**
**Koninklijke KPN N.V.**
**Intellectual Property Group**
**P.O. Box 25110**
**3001 HC Rotterdam (NL)**

(56) References cited:
EP-A1- 1 735 638        US-A1- 2007 054 617
US-A1- 2014 086 191      US-A1- 2016 278 065

• MILNER S ET AL: "Autonomous reconfiguration and control in directional mobile ad hoc networks", IEEE CIRCUITS AND SYSTEMS MAGAZINE, IEEE SERVICE CENTER, NEW YORK, NY, US, vol. 9, no. 2, 1 April 2009 (2009-04-01), pages 10-26, XP011262071, ISSN: 1531-636X

## Description

### *Field of the invention*

The invention relates to a car comprising a device for communicating with at least one neighboring device.
The invention further relates to a method of communicating between the device comprised in a car and at least one neighboring device.
The invention also relates to a computer program product enabling a computer system to perform such a method.

### *Background of the invention*

US2010/0214085 discloses a method and system for using vehicle-to-vehicle cooperative communications for traffic collision avoidance. One device detects a "situation", such as a pedestrian within the crosswalk, where an "offending object" is in or near a roadway feature, which could result in a collision. The detecting vehicle informs a second vehicle via wireless communication of the detecting vehicle's geographic location, the geographic location of the detected object, and the geographic location of the roadway feature, e.g. a crosswalk boundary. A receiving vehicle receives this data and takes appropriate avoidance action.
A drawback of this device and method is that in more complex situations, interference between devices becomes an issue. For example, a vehicular network may be very dense and very dynamic in nature. Vehicles may be constantly moving and a large number of vehicles may be present in a relatively small area. Furthermore, large amounts of data may be exchanged between individual vehicles and vehicles and base stations.
US 2014/086191 A1 discloses a method and system for providing an integrated long range, high capacity communication system between several entities involved in maritime Simultaneous Operations (SIMOPS). The method and system makes use of narrow lobe phase steerable antenna being controllable in both azimuth and elevation by software control.
Milner (Milner S. et al: "Autonomous reconfiguration and control in directional mobile ad hoc networks", IEEE Circuits and Systems Magazine, IEEE Service Center, New York, NY, US, vol. 9, no. 2, 1 April 2009 (2009-04-01), pages 10-26) discloses in par. 2.4.2 pointing using optical beacons placed on each node using an optical imaging system, consisting of a camera, lens or mirrors. This technique is described to work best for relatively short link distances, hundreds of meters to a couple of kilometers, over which the beacon is clearly viewable by the imaging system.
US 2007/054617 A1 provides a short-range wireless mobile communication system with a first terminal and a mobile terminal that are each adapted for transmitting and receiving an information carrying signal wave, whereby at least the first terminal or the mobile terminal comprise a directional signal wave converter for transmitting and/or receiving the information carrying signal wave with a directional characteristic and a control means for controlling the directional characteristic according to a position of the mobile terminal relative to the first terminal.

### *Summary of the invention*

As will be appreciated by one skilled in the art, aspects of the present invention are embodied as a device comprised in a car, according to claim 1, a method according to claim 11, or a computer program product according to claim 15 According to the claimed invention, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a car according to claim 1. Furthermore, aspects of the present invention may take the form of a computer program and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).
Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor of the device comprised in a car according claim 1.
These computer program instructions are also stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems which fall under the scope of claim 1 that perform the specified functions or acts, or combinations of special purpose hardware and computer instructions.

It is a first object of the invention to provide a device comprised in a car according to claim 1 for communicating with at least one neighboring device, which reduces interference in inter-device communication.

It is a second object of the invention to provide a method of communicating for a car comprised in a vehicle with at least one neighboring device, which reduces interference in inter-device communication.

According to the invention, the first object is realized in that the device comprises at least one of a transmitter for transmitting a data signal to at least one neighboring device and a receiver for receiving a data signal from at least one neighboring device, and a processor configured to determine at least one of a distance and a direction to at least one neighboring device relative to said device, said at least one of said distance and said direction being determined using at least one sensor other than said receiver, to configure at least one of said at least one of said transmitter and said receiver in dependence on said at least one of said distance and said direction, and to use said at least one of said transmitter and said receiver, said transmitter being used to transmit a data signal to at least one of said at least one neighboring device and said receiver being used to receive a data signal from at least one of said at least one neighboring device on said device. When a component, e.g. an antenna array, used by the transmitter and/or the receiver is configured, this is considered to configure the transmitter and/or the receiver itself.

The device may be moving, for example. A neighboring device is typically a device within sensor range of the at least one sensor, e.g. within line of sight. Preferably, at least one of the at least one neighboring device is a moving device. In an embodiment, all of the at least one neighboring device are moving devices. Said at least one of said distance and said direction may be determined using further components in addition to said at least one sensor, for example. When the at least one neighboring device comprises multiple neighboring devices, multiple pairs of distance/direction may be determined and used to configure the at least one transmitter and/or the at least one receiver, for example, to form multiple beamforming bundles.

The inventors have recognized that configuring the transmitter and/or receiver based on the determined distance and/or direction, e.g. by using beamforming, reduces interference in inter-device communication. The inventors have further recognized that beamforming can benefit from using at least one sensor other than the receiver to determine the distance and/or direction. Using geographic coordinates obtained from positioning systems like GPS and received from neighboring devices instead of using such a sensor or such sensors may not work adequately, because the granularity of geographic coordinates is too coarse in situations where devices are in relative proximity, amongst others. Furthermore, it is not necessarily straightforward to get the GPS coordinates of, for example, a vehicle in front of the device. First, the device may have to identify the vehicle, communicate with it, and then get its position. While communicating, interference is already caused. Furthermore, the roundtrip delay may be too large and this approach may not scale well.

Using conventional antenna array training techniques, e.g. based on direction of arrival techniques, may not work well either, because these training algorithms require feedback and several iterations to converge to a set of stable antenna array coefficients. This may become increasingly difficult when at least one of the device and the neighboring device is moving with respect to the other. For example, if a neighboring device comes in proximity of the device, the device may need to communicate with this neighboring device, and if the receiver has to be used to determine whether an additional beamforming bundle has to be configured for communication with this neighboring device, instead of using the invention, the receiver has to implement a scanning / broadcasting mode to acquire new devices in addition to the beamforming mode for communication. The use of such a scanning / broadcasting mode may reduce the advantage beamforming has to minimize interference (interference caused by the device and interference received by the device).

Said processor may be configured to determine a distance to at least one neighboring device relative to said device and to configure said transmitter to adapt its power, preferably only the transmission power in the direction of the neighboring device, in dependence on said distance to said at least one neighboring device relative to said device. If the distance to the at least one neighboring device is known, the power can be less than the maximum (e.g. than the maximum allowed due to legal requirements or the maximum possible with the used hardware) in order to reduce interference experienced by other devices.

Said processor may be configured to determine a direction to at least one neighboring device relative to said device and to configure said at least one of said transmitter and said receiver to adapt its directivity in dependence on said direction to said at least one neighboring device relative to said device. By adapting the directivity of the transmitter, transmissions of the transmitter can be directed only to the neighboring devices to which the device wants to transmit, thereby reducing interference experienced by other devices. By adapting the directivity of the receiver, the receiver can better distinguish signals from relevant neighboring devices from signals from other devices, thereby reducing interference caused by these other devices.

Said device may comprise said at least one sensor. Although it is possible to use at least one sensor that is not part of the device, e.g. one or more sensors of one or more base stations could determine the distance and/or direction to the at least one neighboring device, this would require the distance and/or direction data to be converted from data relative to the position of the (base station) sensor to data relative to the position of the device.

Said at least one sensor may use at least one of LIDAR, radar, sonar, image recognition, structured light and 3D vision to determine said at least one of said distance and said direction to said at least one neighboring device relative to said device. These techniques can all be used to determine distances and directions to neighboring devices without relying on data transmitted by these neighboring devices and are therefore suited to complex situations, e.g. a very dense and dynamic vehicular network. Said at least one sensor may additionally or alternatively use other technologies. Different technologies and/or sensors may be used to determine distance and direction, for example. The processor may be able to combine multiple sensor input to determine the distance and direction to the at least one neighboring device relative to the device, for example.

Said processor may be configured to determine both a distance and a direction to said at least one neighboring device relative to said device. In this case, said processor may be further configured to determine a depth map from said distance and said direction to said at least one neighboring device relative to said device. A device that determines both distance and direction to the at least one neighboring device relative to the device, and configures the transmitter and/or receiver accordingly, reduces interference more than a device that only determines the distance to neighboring devices or only determines the direction to neighboring devices. The advantage of determining a depth map is that depth maps have been standardized and are being standardized and existing methods and tools for creating and working with depth maps can be re-used.

Said processor may be further configured to determine at least one of a movement speed and a movement direction of said at least one neighboring device relative to said device and to configure said at least one of said transmitter and said receiver in dependence on said at least one of said movement speed and said movement direction. Directivity and power of the transmitter and directivity of the receiver can be configured more optimally for moving neighboring devices when the movement speed and/or movement direction of these neighboring devices is known. For example, transmitter power can be reduced when a neighboring device (or the farthest neighboring device if the transmit power cannot be set per neighboring device) is moving towards the device and may have to be increased when the (farthest) neighboring device moves away from the device until a maximum transmitter power threshold may be reached. Here the farthest neighboring device is the neighboring device farthest away that is still relevant for transmission from/to the device, e.g. within a certain neighborhood area that may vary with the movement direction and/or movement speed of the device.

Said at least one of said transmitter and said receiver may be coupled to an array of antennas. This allows beamforming to be used to adapt the directivity of the transmitter and/or receiver and/or the transmit power of the transmitter. If the transmitter is used to transmit to multiple neighboring devices, it may be possible to set one beamforming bundle at a low power for a nearby device and to set another beamforming bundle at a high power for a (relatively) faraway device, for example.

Said processor may be further configured to determine a weather condition and to configure said at least one of said transmitter and said receiver in dependence on said weather condition. Weather conditions can have a non-negligible impact on RF communications. For instance, in the 60GHz band, the propagation conditions become worse when fog is present. Additional transmission power may be used for the main lobe of the antenna pattern when fog is present. It may be possible to use the at least one sensor to determine the weather condition, e.g. if it is a LIDAR sensor.

According to the invention according to independent claim 11, the second object is realized in that the method comprises the steps of determining at least one of a distance and a direction to at least one neighboring device relative to a device comprised in a car, said at least one of said distance and said direction being determined using at least one sensor other than a receiver used by said device comprised in a car to receive a data signal from said at least one neighboring device, configuring at least one of a transmitter and said receiver in dependence on said at least one of said distance and said direction, and using said at least one of said transmitter and receiver, said transmitter being used to transmit a data signal from said device to at least one of said at least one neighboring device and said receiver being used to receive a data signal from at least one of said at least one neighboring device on said device comprised in a car. Said method may be performed by software running on a programmable device. This software is provided as a computer program product.

Said at least one sensor may use at least one of LIDAR, radar, sonar, image recognition, structured light and 3D vision to determine said at least one of said distance and said direction to said at least one neighboring device relative to said device comprised in a car.

The step of determining at least one of a distance and a direction to at least one neighboring device relative to a device may comprise determining said distance and said direction to said at least one neighboring device relative to said device.

The step of determining at least one of a distance and a direction to at least one neighboring device relative to a device may comprise determining a depth map from said distance and said direction to said at least one neighboring device relative to said device.

The step of determining at least one of a distance and a direction may comprise determining a distance to said at least one neighboring device relative to said device and the step of configuring at least one of a transmitter and said receiver may comprise configuring said transmitter to adapt its power in dependence on said distance to said at least one neighboring device relative to said device.

The step of determining at least one of a distance and a direction may comprise determining a direction to at least one neighboring device relative to said device and the step of configuring at least one of a transmitter and said receiver may comprise configuring said at least one of said transmitter and said receiver to adapt its directivity in dependence on said direction to said at least one neighboring device relative to said device.

The method may further comprise the step of determining at least one of a movement speed and a movement direction of said at least one neighboring device relative to said device and the step of configuring at least one of a transmitter and said receiver in dependence on said at least one of said distance and said direction may further comprise configuring said at least one of said transmitter and said receiver in dependence on said at least one of said movement speed and said movement direction.

The method may further comprise the step of determining a weather condition and the step of configuring at least one of a transmitter and said receiver in dependence on said at least one of said distance and said direction may further comprise configuring said at least one of said transmitter and said receiver in dependence on said weather condition.

In another aspect of the invention, a device for communicating with at least one neighboring device comprises at least one of a transmitter for transmitting a data signal to at least one neighboring device and a receiver for receiving a data signal from at least one neighboring device, and a processor configured to determine at least one of a distance and a direction to at least one neighboring device relative to said device, said at least one of said distance and said direction being determined using at least one sensor, said at least one sensor sensing electromagnetic signals in a different frequency band than a frequency band used by said receiver to receive said data signal from said at least one neighboring device, to configure at least one of said at least one of said transmitter and said receiver in dependence on said at least one of said distance and said direction, and to use said at least one of said transmitter and said receiver, said transmitter being used to transmit a data signal to at least one of said at least one neighboring device and said receiver being used to receive a data signal from at least one of said at least one neighboring device on said device

In a further aspect of the invention, a method of communicating with at least one neighboring device comprises the steps of determining at least one of a distance and a direction to at least one neighboring device relative to a device, said at least one of said distance and said direction being determined using at least one sensor, said at least one sensor sensing electromagnetic signals in a different frequency band than a frequency band used by said device to receive a data signal from said at least one neighboring device, configuring at least one of a transmitter and said receiver in dependence on said at least one of said distance and said direction, and using said at least one of said transmitter and receiver, said transmitter being used to transmit a data signal from said device to at least one of said at least one neighboring device and said receiver being used to receive a data signal from at least one of said at least one neighboring device on said device.

Moreover, a computer program for carrying out the method described herein, as well as a non-transitory computer readable storage-medium storing the computer program are provided. A computer program may, for example, be downloaded by or uploaded to an existing device or be stored upon manufacturing of these devices or systems.

A non-transitory computer-readable storage medium stores at least one software code portion, the software code portion, when executed or processed by a computer, being configured to perform executable operations comprising: determining at least one of a distance and a direction to at least one neighboring device relative to a device, said at least one of said distance and said direction being determined using at least one sensor other than a receiver used by said device to receive a data signal from said at least one neighboring device, configuring at least one of a transmitter and said receiver in dependence on said at least one of said distance and said direction, and using said at least one of said transmitter and receiver, said transmitter being used to transmit a data signal from said device to at least one of said at least one neighboring device and said receiver being used to receive a data signal from at least one of said at least one neighboring device on said device.

### Brief description of the Drawings

These and other aspects of the invention are apparent from and will be further elucidated, by way of example, with reference to the drawings, in which:

- Fig.1 is a block diagram of the device of the invention;
- Fig.2 is a block diagram of an embodiment of the device;
- Fig.3 is a block diagram of an array of antennas used in an embodiment of the device;
- Fig.4 illustrates an embodiment of the device determining distance and/or direction to neighboring devices;
- Fig.5 illustrates an embodiment of the device transmitting from and/or receiving to neighboring devices;
- Fig.6 is a flow diagram of the method of the invention;
- Fig. 7 is a block diagram of an array of antennas used in a second embodiment of the device;
- Fig. 8 is an example of an antenna pattern used by the device in an embodiment; and
- Fig. 9 is a block diagram of an exemplary data processing system for performing the method of the invention.

Corresponding elements in the drawings are denoted by the same reference numeral.

### Detailed description of the Drawings

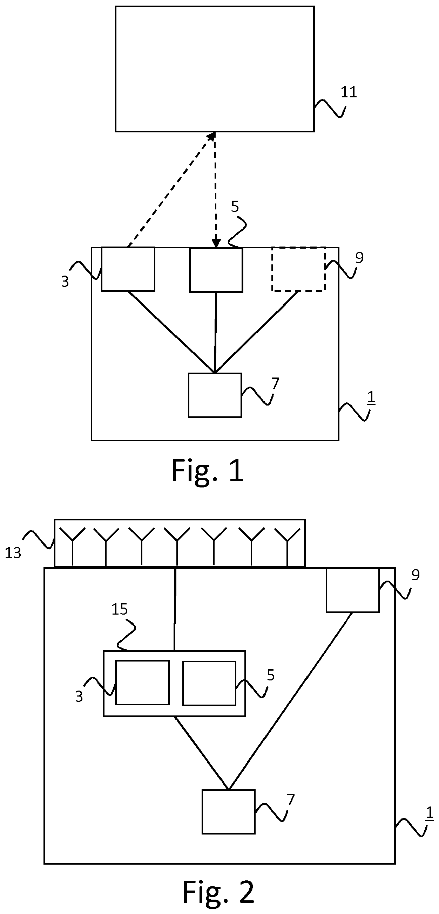

The device **1** of the invention is comprised in a car and comprises a transmitter **3** for transmitting a data signal to at least one neighboring device **11** and/or a receiver **5** for receiving a data signal from at least one neighboring device **11,** see **Fig.1**. The device **1** further comprises a processor **7**. The processor **7** is configured to determine a distance and/or a direction to at least one neighboring device **11** relative to the device **1**. The distance and/or the direction are determined using at least one sensor **9** other than the receiver **5**. The processor **7** is further configured to configure the transmitter **3** and/or the receiver **5** in dependence on the distance and/or the direction. The processor **7** is also configured to use the transmitter **3** to transmit a data signal to at least one of the at least one neighboring device **11** and/or to use the receiver **5** to receive a data signal from at least one of the at least one neighboring device **11**. One, multiple or all of the at least neighboring device **11** may be moving. Device 1 is configured for both receiving a data signal and transmitting a data signal.

In an embodiment, the device **1** comprises the at least one sensor **9** as shown in **Fig.1**. The device **1** is a ear or a module to be incorporated in a car, for example. The neighboring device **11** may be another vehicle, for example. The at least one sensor **9** may be an existing sensor that is re-used, e.g. at least one sensor used by self-driving vehicles to detect objects. The at least one sensor **9** could alternatively be part of a base station, for example, e.g. if the device **1** is a vehicle.

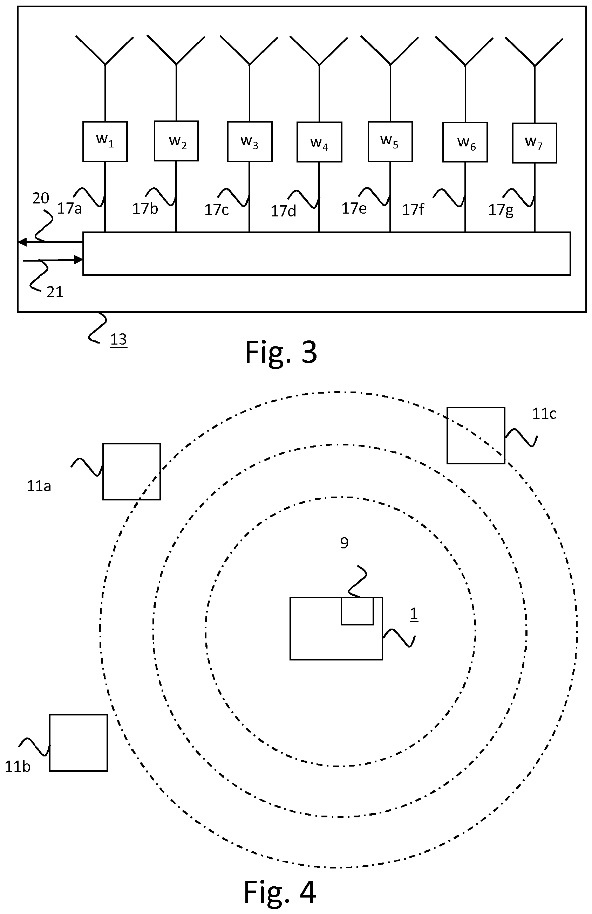

In the embodiment of the device **1** shown in **Fig. 2,** transmitter **3** and receiver **5** are coupled to an array of antennas **13**. In this embodiment, the transmitter **3** and the receiver **5** are part of a transceiver **15** and the at least one sensor **9** is part of the device **1**. In the embodiment shown in **Fig.3**, the array of antennas **13** comprises seven antennas **17a-g.** The antennas **17a-g** of the antenna array **13** may be arranged in a linear configuration, a rectangular configuration, or a circular configuration, for example. Alternatively, the antenna array elements **17a-g** may be arranged in a three-dimensional configuration, for example.

The processor **7** is configured to configure the individual antennas **17a-g** of antenna array **13** for transmission and/or reception, e.g. by setting the amplitude and phase of the signals for each of the elements **17a-g** of the antenna array **13**. In this embodiment, the antenna array **13** can be used for both transmission and reception of data signals, e.g. to a neighboring device **11** in the vicinity of the device **1**. In another embodiment, the device **1** may only be able to transmit data signals, may only be able to receive data signals or may use different antennas/antenna arrays for transmitting and receiving. The spacing between the antenna array elements **17a-g** may be in the order of the wavelength of the electromagnetic waves used for communication, for example. Although the embodiment of the antenna array **13** shown in **Fig. 3** comprises seven antennas **17a-g,** the antenna array **13** could alternatively comprise more or fewer antennas.

The input signal of the antenna array **13,** provided by transmitter **3,** is denoted by input signal **21**. The input signal **21** is processed by an array coefficient for each of the 7 array elements. The array coefficients can be denoted by $w_1,...,w_N$ (N being the number of antennas, N being 7 in this embodiment). To define the operation of the antenna array **13,** a complex sinusoidal may be taken for input signal **21**. The reason is that the main operation of the antenna array is linear, and any input signal may be decomposed into a sum of complex sinusoidal signals by, for instance, the Fourier transform. The wireless output of the antenna array **13** is then equal to a superposition of the response of the antenna array **13** to the constituent sinusoidal signals of the input signal **21**. For a complex sinusoidal input, the wireless output of the ith element of the antenna array may be written as $s_i(t)=w_i(f)e^{j(sqrt(-1))2\pi ft}$, where $w_i(f)$ is a complex number that denotes the array coefficient for the *ith* antenna. The input signal **21** is thus multiplied by the array coefficients to obtain the wireless output. $w_i$ is in general a function of the frequency.

The output signal of the antenna array, provided to receiver **5,** is denoted by output signal **20.** As before, the operation of the array may be defined in terms of a complex sinusoidal signal. The wireless signal received at the ith antenna may be written as $y_i(t)=R_i e^{i\varphi(i)} e^{j2\pi l}$. Here $R_i$ is a complex number that denotes the received amplitude and $\varphi(i)$ an additional phase shift which depends on the spatial location of the antenna element. Each of these signals may be multiplied by the array coefficients, and the results summed to generate the output signal **20.**

Alternatively, other beamforming architectures may be used. A well-known architecture is the sum-and-delay beamforming architecture. The array coefficients that multiply the complex sinusoid signals effectively implement a phase shift of these sinusoidal signals. In case the transmitted or received signal is narrow-band, the phase shift may be replaced by a time delay, which leads to the sum-and-delay architecture. The choice of the array coefficients determines the antenna pattern that is generated. Many methods exist to choose these coefficients. Furthermore, several constraints may be taken into account when designing the array coefficients. An overview of several methods is given in "Beamforming: A Versatile Approach to Spatial Filtering", B.D. Van Veen et al, IEEE ASSP Magazine, April 1988.

In an embodiment of the device **1,** the at least one sensor **9** uses at least one of LIDAR, radar, sonar, image recognition, structured light and 3D vision to determine the at least one of the distance and the direction to the at least one neighboring device **11** relative to the device **1.** An example of the device **1** determining the distance and/or direction of neighboring devices **11a, 11b and 11c** relative the device **1** is illustrated with the help of **Fig.4. Fig. 4** shows a two dimensional map with the device **1** and the neighboring devices **11a-c.** One, multiple or all of the neighboring devices **11a-c** may be moving. Device **1** may be moving. Alternatively, the at least one sensor **9** is used to acquire a point cloud or depth map, e.g. using time-of-flight techniques if the at least one sensor **9** uses LIDAR. A depth map is for example an image in which the color and/or intensity of the pixels do not represent the color and/or intensity of the object captured in the image, but the distance to this object. This depth map may comprise multiple parts, each for a certain direction, or may be a 360 degrees panoramic map of the environment of the at least one sensor **9,** for example. This depth map thus comprises distances and directions to the neighboring devices.

LIDAR is a technology that can be used advantageously to measure the distance and the direction to neighboring devices. It measures distance by illuminating a target with a laser and analyzing the reflected light. For an illuminated point, the time of flight is measured from which the distance from the point to the LIDAR sensor may be derived. By repeating this multiple times for multiple directions (in parallel and/or in sequence), multiple neighboring devices can be detected. By associating each measured distance with the corresponding direction in which the laser was targeted, a depth map or point cloud can be formed. Sonar and radar are technologies similar to LIDAR, but use sound and radio (or micro) waves, respectively, instead of laser. For example, active sonar emits pulses of sound and listens for echoes. These pulses of sound may be in ultrasonic frequencies, for example.

Structured Light involves projecting a known pattern, e.g. a grid, in a certain direction and determining the depth and surface information of the objects in this direction by analyzing the deformation of the known pattern when striking surfaces, e.g. by using a camera. 3D Vision involves using one or more cameras to capture the same scene from different angles and comparing the captured images in order to determine the depth of the objects in the scene. A stereo camera may be used, for example. Multiple stereo cameras may be used to detect neighboring devices 360 degrees around the device, for example. A single camera, e.g. an ordinary camera without 3D, with image recognition may be used to find the direction of objects, for example. Many cars already have cameras, e.g. to detect traffic signs. These cameras may not be able to find distance, but cars may be able to use sensor fusion to build a map of their surroundings using multiple sensors. The receiver **5,** e.g. using an antenna area **13,** may provide input (for direction) in this sensor fusion.

From the data measured by the at least one sensor **9,** the processor **7** identifies other devices of interest in the near environment of the device **1.** A device of interest may be a neighboring device that is able to communicate with the device **1.** There are several ways neighboring devices may be detected from the sensor data. In some cases the type of device is known (e.g. a vehicle). In such a case image processing techniques may be used to detect these neighboring devices. Furthermore, the actual antenna array may also be detected on the neighboring devices. Another option is to mark devices with a code to make them more recognizable.

In the same or in a different embodiment, the processor **7** is further configured to determine a movement speed and/or a movement direction of the at least one neighboring device **11** relative to the device **1** and to configure the transmitter **3** and/or the receiver **5** in dependence on the movement speed and/or the movement direction. The speed and direction of movement of the neighboring device **11a-c** may be determinable from the sensor data. Alternatively, neighboring devices may transmit, e.g. broadcast, data packets comprising this information.

In an embodiment of the device **1,** when the processor **7** is configured to determine a direction to at least one neighboring device **11** relative to the device **1,** the processor **7** is further configured to configure the at least one of the transmitter **3** and the receiver **5** to adapt its directivity in dependence on the direction to the at least one neighboring device **11** relative to the device **1.** For example, an antenna array **13** is configured based on the devices identified from the depth map as measured by a, e.g. LIDAR, sensor **9.** This allows the antenna array **13** to create selective antenna patterns that only transmit to and/or receive from the identified devices.

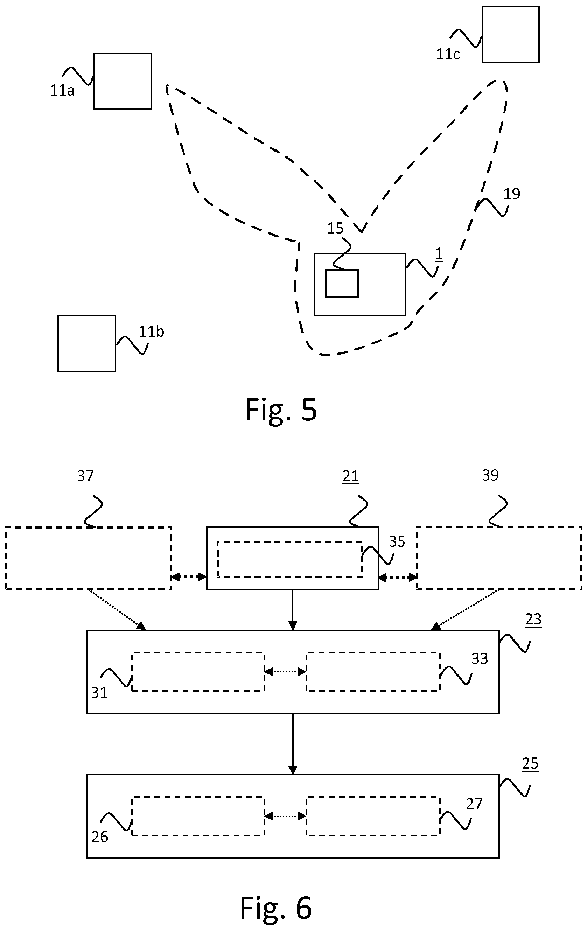

**Fig. 5** shows device **1** and its transceiver **15**. Transceiver **15** comprises the transmitter **3** and the receiver **5** and is coupled to antenna array **13,** as shown in **Fig. 2. Fig. 5** further shows the three neighboring devices **11a, 11b and 11c** of **Fig.4.** One, multiple or all of the neighboring devices **11a-c** may be moving. In the example shown in **Fig.5,** device **1** decides to transmit and/or receive information only from neighboring devices **11a** and **11c** and suppress any information sent and/or received from neighboring device **11b,** e.g. because neighboring device **11b** is moving away in opposite direction from device **1.** The antenna pattern **19** can thus be tailored very precisely to devices present in the environment of the device **1.** Furthermore, when any of the devices are moving, it is possible to adjust the antenna pattern **19** very rapidly.

When the receiver **5** is configured in dependence on the direction to the neighboring devices **11a-c,** the coefficients of the antenna array **13** may be chosen to lead to a maximum transfer function for the neighboring devices **11a** and **11c,** from which the device **1** would like to receive information, and to lead to a minimum transfer function for possible interfering neighboring device **11b.** When the transmitter **3** is configured in dependence on the direction to the neighboring devices **11a-c,** the coefficients of the antenna array **13** may be chosen to lead to a maximum transfer function for the neighboring devices **11a** and **11c,** to which the device **1** would like to transmit information, and to lead to a minimum transfer function for neighboring device **11b,** which might experience interference otherwise.

When the processor **7** is configured to determine the distance to the neighboring devices **11a-c,** the transmission power corresponding to each of the directions of the antenna pattern **19** may be chosen based on the distance from the device **1** to the neighboring devices present in that particular direction. In this way, only as much transmission power as is required to reach these devices is used. This may lower interference caused to other neighboring devices and decrease spectrum pollution.

The array coefficients may be computed directly, e.g. (near) real-time, as soon as the neighboring devices have been identified, for example. Alternatively, the device **1** may maintain a database of pre-computed antenna patterns, for example. Once the devices are detected from the at least one sensor data, a suitable antenna pattern may be selected from the database.

In the same or in a different embodiment, the processor **7** is further configured to determine a weather condition and to configure the transmitter **3** and/or the receiver **5** in dependence on the weather condition. The weather condition may be extracted from LIDAR data, for example. An example is the presence of fog, which may interfere with RF communications. It is well known that in the 60GHz band, the propagation conditions become worse when fog is present. The processor **7** may set the antenna array coefficients and transmission power based on the weather condition. When fog is present additional transmission power may be used for the main lobe of the antenna pattern. Furthermore, the side lobes will be additionally attenuated by the fog, which causes less interference.

The method of the invention comprises at least three steps, see **Fig. 6.** A step **21** comprises determining a distance and/or a direction to at least one neighboring device relative to a device, the distance and/or the direction being determined using at least one sensor other than a receiver used by the device to receive a data signal from the at least one neighboring device. A step **23** comprises configuring a transmitter and/or the receiver in dependence on the distance and/or the direction. A step **25** comprises a step **26** of using the transmitter to transmit a data signal from the device to at least one of the at least one neighboring device and/or a step **27** of using the receiver to receive a data signal from at least one of the at least one neighboring device on the device. The at least one sensor used in step **21** may use at least one of LIDAR, radar, sonar, image recognition, structured light and 3D vision to determine the at least one of the distance and the direction to the at least one neighboring device relative to the device.

In an embodiment of the method, step **21** comprises a step **35** of acquiring a depth map using the, e.g. LIDAR, sensor data. The acquired depth map is used to identify devices in the near environment of the (main) device. These are devices that are in the line-of-sight of the device, and that may receive communications from the device. Preferably, only those devices are selected from which it is desirable to receive information.

In this embodiment, step **23** may comprise a step **31** of configuring the transmitter (e.g. by configuring the antenna array it uses) to selectively transmit into directions that correspond to a subset or all of the devices identified in the depth map and/or configuring the receiver (e.g. by configuring the antenna array it uses) to selectively receive from a subset or all of the devices identified in the depth map. The transmitter may be configured such that the transmission power is very low (e.g. a null) for directions corresponding to devices that are not in the (sub)set of identified devices. Furthermore, the distance from the device to each of the neighboring devices may also be taken into account. This may be achieved by e.g. choosing the transmission power for each direction based on the distance in step **33.** Steps **31** and **33** may be performed in parallel or one after the other in any desired order.

If the transmitter is configured according to step **23,** the transmitter transmits data to the identified devices in step **25** with the antenna pattern configured in step **23.** Otherwise, the transmitter transmits data using its default or differently configured antenna pattern **19.** In the embodiment shown in **Fig. 5,** the same antenna pattern is used to transmit data to each of the identified devices. In an alternative embodiment, a first antenna pattern is used to transmit data to a first subset of the identified devices and a second pattern is used to transmit data to a second subset of the identified devices. A different antenna pattern may even be used for each different detected device to which the (main) device transmits data.

If the receiver is configured according to step **23,** the receiver receives data in step **27** with the antenna pattern **19** configured in step **23**. Otherwise, the receiver receives data using its default or differently configured antenna pattern. In the embodiment shown in **Fig. 5,** the same antenna pattern is used to receive data from each of the identified devices. In an alternative embodiment, a first antenna pattern is used to receive data from a first subset of the identified devices and a second pattern is used to receive data from a second subset of the identified devices. A different antenna pattern may even be used for each different detected device from which the (main) device receives data. This is beneficial e.g. when the identified devices use time division multiple access or frequency division multiple access and the device **1** knows which time slot or frequency an identified device uses. The device **1** may switch between using a dedicated antenna pattern for identified devices of which this information is known and an omni-directional pattern for the other identified devices, for example.

In the same or in a different embodiment, the method further comprises a step **37** of determining a movement speed and/or a movement direction of the at least one neighboring device, e.g. neighboring devices **11a** and **11c** of **Fig. 5,** relative to the device, and step **23** further comprises configuring the transmitter and/or the receiver in dependence on this movement speed and/or this movement direction.

In the same or in a different embodiment, the method further comprises a step **39** of determining a weather condition and step **23** further comprises configuring the transmitter and/or the receiver in dependence on this weather condition. Steps **37** and **39** may be performed in parallel to step **21** and/or in parallel to each other. Some or all of steps **21, 37** and **39** may be performed in sequence in any desired order.

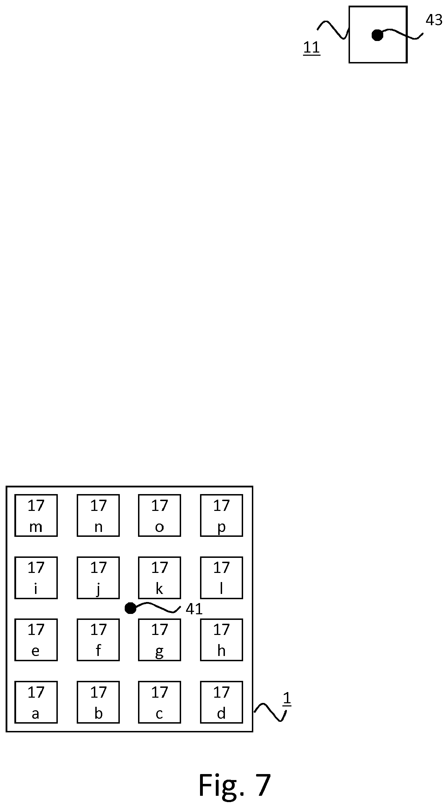

A basic example of how the coefficients of the antenna array **13** may be computed in step **23** is now described with reference to **Fig. 7. Fig. 7** shows an environment with a device **1** and a neighboring device **11**. In this example, device **1** has an antenna array with sixteen antenna elements **17a-p** arranged in a rectangular configuration. The spacing of the antenna elements is d, i.e. the spacing between all horizontally adjacent antenna is $d$ and the spacing between all vertically adjacent antenna elements is also $d$.

In this example, a depth map is acquired in step **35** and this depth map comprises the coordinates of neighboring device **11**. For the purpose of this example, a coordinate system is used where the origin **41** coincides with the location of device **1**. The origin **41** is denoted by (0,0) and the location **43** of neighboring device **11** is denoted by (x, y). An extension to three dimensions is straightforward.

When device **1** transmits data to neighboring device **11** using beamforming, it can be assumed that device **1** transmits a sinusoidal signal from each of the elements **17a-p** of antenna array **13**. In a practical communication system, narrow-band communications, where the modulated carrier signal resembles a sinusoidal signal, may for example be used. Furthermore, in case multi-carrier techniques such as OFDM are used, each of the modulated carriers may be a sinusoidal signal also. A phase shift is normally configured per antenna element.

Beamforming is used to obtain a maximal transfer from the antenna array **13** of device **1** to neighboring device **11.**This can be accomplished by making sure that each of the sinusoidal signals transmitted from the antenna elements **17a-p** are in phase at the location of neighboring device **1**. Since device **1** knows the coordinates *(x,y)* of neighboring device **11** from the depth map, it may compute the phase at *(x,y)* for a sinusoidal signal transmitted from each of the antenna elements.

The elements of a square antenna array, as depicted in **Fig.7,** may be indexed by integer coordinates *(i,j)*. For example, antenna elements 17a, 17b, 17c, 17d, 17e, 17f, 17g, 17h, 17i, 17j, 17k, 17i, 17m, 17n, 17o and 17p may be indexed by coordinates (0,0), (1,0), (2,0), (3,0), (0,1), (1,1), (2,1), (3,1), (0,2), (1,2), (2,2), (3,2), (0,3), (1,3), (2,3), (3,3), respectively. Both $i$ and $j$ may run from 0 to $K$-1 where the number of array elements is $N=K^2$. Relative to the origin **41** (0,0), defined as the center of the antenna array **13** of device **1,** the distance of each of the antenna array elements **17a-p** to *(x,y)* may be expressed as defined in Equation 1:

$$d(i,j) = \sqrt{(x - x_a(i))^2 + (y - y_a(j))^2} \qquad \textbf{(Equation 1)}$$

where $x_a(i)$ and $y_a(j)$ are the $x$ and $y$ coordinate of array element $(i,j)$, respectively.

In case $K$ is even, $x_a(i)$ and $y_a(j)$ may be expressed as defined in Equations 2 and 3:

$$x_a(i) = -\frac{dK}{2} + \frac{d}{2} + id \qquad \textbf{(Equation 2)}$$

$$y_a(j) = -\frac{dK}{2} + \frac{d}{2} + jd \qquad \textbf{(Equation 3)}$$

The shift in phase for a sinusoidal signal transmitted from array element *(i,j)* at *(x,y)* may now be expressed as defined in Equation 4:

$$\varphi(i,j) = 2\pi \frac{d(i,j)}{\lambda}$$ **(Equation 4)**

where $\lambda = c/f$ denotes the wavelength of the sinusoidal wave, $c$ the speed of light, and $f$ the frequency of the sinusoidal wave.

Given these phase shifts, the coefficient $w(i,j)$ for antenna element $(i,j)$ may now be chosen as defined in Equation 5:

$$w(i,j) = e^{-j\varphi(i,j)}$$ **(Equation 5)**

which effectively compensates for the phase shift at the location of neighboring device **11.**

Consider another example that differs from the previous example in that device **1** employs a rectangular array with a total number of 64 antennas ($K$=8) with an antenna spacing of $d$=0.075 m. Device **1** may use a sinusoidal carrier of 2 GHz, for example. Device **1** may detect that neighboring device **11** is present at coordinates $(x,y)$=(5,8), and compute a resulting phase shift for each of the 64 array elements.

The phase shift for each of the array elements may be calculated with the following Python script:

```python
import numpy as np
import matplotlib.pyplot as plt
import cmath
import math

def example():
    K = 8        # Array has 8x8=64 elements
    d = 0.075     # Spacing between array elements
    x = 5        # x coordinate of Device B
    y = 8        # y coordinate of Device B
    f = 2e9       # Frequency of sinusoidal

    coef, phase = compute_array_tranfer_coef_efficients(K, d, x, y, f)
    # We observe the antenna pattern at a radius of 10m and plot the result
    theta, phi_vec = plot_antenna_pattern_square_array(K, d, coef, 10, f)
```

```
def plot_antenna_pattern_square_array(K, d, array_coefficients, r, f):
    phi_vec = []
    theta = np.arange(0, 2*np.pi, 0.01)
    array_xi = range(0, K, 1)
    array_yi = range(0, K, 1)
    for t in theta:
        x = math.cos(t)*r
        y = math.sin(t)*r
        phi_t = 0.0
        for i in array_xi:
            xa = -d*K/2+d/2 + i*d
            for j in array_yi:
                ya = -d*K/2+d/2 + j*d
                di = math.sqrt(pow(x-xa, 2) + pow(y-ya, 2))
                phi = 2*np.pi*di/(3e8/f)
                coef = cmath.exp(complex(0, 1)*phi)*array_coefficients[i][j]
                phi_t += coef
        phi_vec += [abs(phi_t)]
    phi_vec = phi_vec/max(phi_vec)
    ax = plt.subplot(111, projection='polar')
    ax.plot(theta, phi_vec, color='k', linewidth=3)
    ax.set_rmax(1.0)
    plt.show()
    return theta, phi_vec

def compute_array_tranfer_coef_efficients(K, d, x, y, f):
    array_coefficients = np.empty([K, K], dtype=complex)
    coefficients_phase = np.empty([K, K], dtype=float)
    array_d = np.empty([K])
    array_xi = range(0, K, 1)
    array_yi = range(0, K, 1)

    for i in array_xi:
        xa = -d*K/2+d/2 + i*d
        for j in array_yi:
            ya = -d*K/2+d/2 + j*d
            di = math.sqrt(pow(x-xa, 2) + pow(y-ya, 2))
            phi = np.pi*2*di/(3e8/f)
            array_coefficients[i][j] = cmath.exp(complex(0, 1)*-phi)
            coefficients_phase[i][j] = 360*cmath.phase(array_coefficients[i][j])/(2*np.pi)
    return array_coefficients, coefficients_phase
```

The resulting phase for each of the antenna elements calculated with this Python script are shown in the following table:

Table 1: Computed phase shifts in degrees for a rectangular array with 64 elements

|       | i=0  | i=1 | i=2 | i=3 | i=4  | i=5  | i=6 | i=7  |
|-------|------|-----|-----|-----|------|------|-----|------|
| j=7   | -138 | -37 | 62  | 161 | -101 | -4   | 91  | -174 |
| j=6   | 73   | 173 | -88 | 10  | 107  | -157 | -62 | 32   |

(continued)

|       | i=0   | i=1   | i=2   | i=3   | i=4   | i=5   | i=6   | i=7   |
|-------|-------|-------|-------|-------|-------|-------|-------|-------|
| j=5   | -77   | 23    | 121   | -141  | -45   | 50    | 145   | -122  |
| j=4   | 133   | -128  | -30   | 67    | 162   | -103  | -9    | 83    |
| j=3   | -17   | 81    | 178   | -86   | 9     | 104   | -163  | -72   |
| j=2   | -168  | -70   | 26    | 122   | -144  | -50   | 42    | 133   |
| j=1   | 41    | 138   | -126  | -31   | 62    | 155   | -113  | -22   |
| j=0   | -111  | -14   | 81    | 175   | -92   | 0     | 92    | -178  |

These phases may then be used to set the array coefficients as defined in Equation 6:

$$w(i,j) = e^{-j\varphi(i,j)}$$ **(Equation 6)**

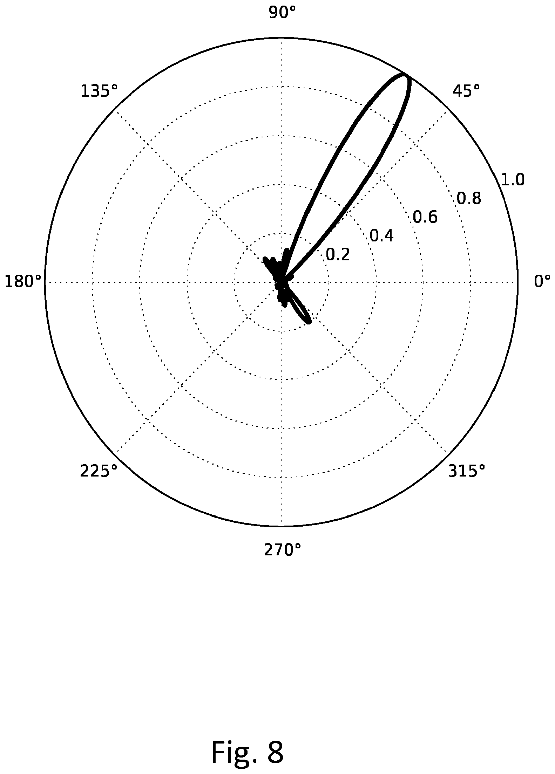

The resulting antenna pattern is shown in **Fig.8.** The antenna pattern shows the achieved directionality from device **1** towards the location of neighboring device **11.**

The computation of coefficients for receiving data from a neighboring device **11** is similar to the computation of coefficients for transmitting data to the neighboring device **11** described in the previous paragraphs. This is because of the reciprocity of propagation of electromagnetic waves. Hence to achieve a particular directionality for transmission and reception, the same array coefficients may be used. Many other methods exist to compute the array coefficients when for instance noise is taken into account, multiple devices are present, and/or side lobes of the antenna pattern are suppressed.

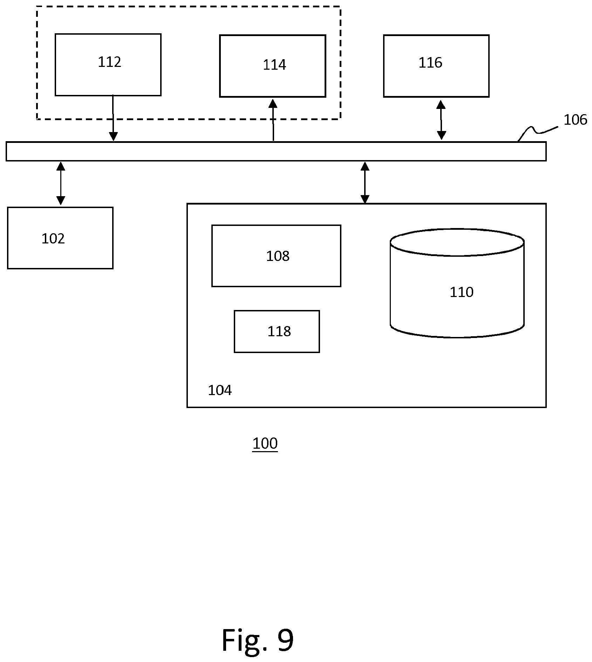

**Fig. 9** depicts a block diagram illustrating an exemplary data processing system that may perform the method as described with reference to **Fig. 6.**

As shown in **Fig. 9,** the data processing system **100** may include at least one processor **102** coupled to memory elements **104** through a system bus **106.** As such, the data processing system may store program code within memory elements **104.** Further, the processor **102** may execute the program code accessed from the memory elements **104** via a system bus **106.** In one aspect, the data processing system may be implemented as a computer that is suitable for storing and/or executing program code. It should be appreciated, however, that the data processing system **100** may be implemented in the form of any system including a processor and a memory that is capable of performing the functions described within this specification. The data processing system **100** may further comprise the at least one of a transmitter and a receiver of the device of the invention, for example. Alternatively, the device **1** of **Fig.1** may comprise the data processing system **100** of **Fig. 9,** for example.

The memory elements **104** may include one or more physical memory devices such as, for example, local memory **108** and one or more bulk storage devices **110.** The local memory may refer to random access memory or other non-persistent memory device(s) generally used during actual execution of the program code. A bulk storage device may be implemented as a hard drive or other persistent data storage device. The processing system **100** may also include one or more cache memories (not shown) that provide temporary storage of at least some program code in order to reduce the number of times program code must be retrieved from the bulk storage device **110** during execution.

Input/output (I/O) devices depicted as an input device **112** and an output device **114** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 9** with a dashed line surrounding the input device **112** and the output device **114**). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **116** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **100,** and a data transmitter for transmitting data from the data processing system **100** to said systems, devices and/or networks. Modems, cable modems, and Ethernet cards are examples of different types of network adapter that may be used with the data processing system **100.**

As pictured in **Fig. 9,** the memory elements **104** may store an application **118.** In various embodiments, the application **118** may be stored in the local memory **108,** the one or more bulk storage devices **110,** or separate from the local memory and the bulk storage devices. It should be appreciated that the data processing system **100** may further execute an operating system (not shown in **Fig. 9**) that can facilitate execution of the application **118.** The application **118,** being implemented in the form of executable program code, can be executed by the data processing system **100,** e.g., by the processor **102.** Responsive to executing the application, the data processing system **100** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor **102** described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A car comprising a device (1) for communicating with at least one neighboring device (11), the device comprised in the car (1) comprising:

   at least one of a transmitter (3) for transmitting a data signal to at least one neighboring device (11) and a receiver (5) for receiving a data signal from at least one neighboring device (11); and **characterised by** a processor (7) configured to determine at least one of a distance and a direction to at least one neighboring device relative to said device (1) comprised in the car, said at least one of said distance and said direction being determined using at least one sensor (9) other than said receiver (5), to configure at least one of said at least one of said transmitter (3) and said receiver (5) in dependence on said at least one of said distance and said direction, and to use said at least one of said transmitter (3) and said receiver (5), said transmitter (3) being used to transmit a data signal to at least one of said at least one neighboring device (11) and said receiver (5) being used to receive a data signal from at least one of said at least one neighboring device (11).

2. A car as claimed in claim 1, wherein said processor (7) is configured to determine a distance to said at least one neighboring device relative to said device (1) comprised in the car and to configure said transmitter (3) to adapt its power in dependence on said distance to said at least one neighboring device (11) relative to said device (1).

3. A car as claimed in any one of claims 1 to 2, wherein said processor (7) is configured to determine a direction to at least one neighboring device relative to said device (1) comprised in the car and to configure said at least one of said transmitter (3) and said receiver (5) to adapt its directivity in dependence on said direction to said at least one neighboring device (11) relative to said device (1).

4. A car as claimed in any one of claims 1 to 3, wherein said device (1) comprised in the car comprises said at least one sensor (9).

5. A car as claimed in any one of claims 1 to 4, wherein said at least one sensor (9) uses at least one of LIDAR, radar, sonar, image recognition, structured light and 3D vision to determine said at least one of said distance and said direction to said at least one neighboring device (11) relative to said device (1) comprised in the car.

6. A car as claimed in any one of claims 1 to 5, wherein said processor (7) is configured to determine a distance and a direction to said at least one neighboring device (11) relative to said device (1) comprised in the car.

7. A car as claimed in claim 6, wherein said processor (7) is further configured to determine a depth map from said distance and said direction to said at least one neighboring device (11) relative to said device (1) comprised in the car.

8. A car as claimed in any one of claims 1 to 7, wherein said processor (7) is further configured to determine at least one of a movement speed and a movement direction of said at least one neighboring device (11) relative to said device (1) comprised in the car and to configure said at least one of said transmitter (3) and said receiver (5) in dependence on said at least one of said movement speed and said movement direction.

9. A car as claimed in any one of claims 1 to 8, wherein said at least one of said transmitter (3) and said receiver (5) is coupled to an array (13) of antennas (17a-g).

10. A car as claimed in any one of claims 1 to 9, wherein said processor (7) is further configured to determine a weather condition and to configure said at least one of said transmitter (3) and said receiver (5) in dependence on said weather condition.

11. A method of communicating from a device comprised in a car to at least one neighboring device, **characterised by** comprising the steps of:

> determining (21) at least one of a distance and a direction to the at least one neighboring device, said at least one of said distance and said direction being determined using at least one sensor other than a receiver used by said device comprised in a car to receive a data signal from said at least one neighboring device
> configuring (23) at least one of a transmitter and said receiver in dependence on said at least one of said distance and said direction; and
> using (25) said at least one of said transmitter and said receiver, said transmitter being used (26) to transmit a data signal from said device comprised in a car to at least one of said at least one neighboring device and said receiver being used (27) to receive a data signal from at least one of said at least one neighboring device on said device.

12. A method as claimed in claim 11, wherein said at least one sensor uses at least one of LIDAR, radar, sonar, image recognition, structured light and 3D vision to determine said at least one of said distance and said direction to said at least one neighboring device relative to said device (1) comprised in a car.

13. A method as claimed in any one of claims 11 to 12, wherein the step of determining (21) at least one of a distance and a direction to at least one neighboring device relative to said device comprised in a car device comprises determining said distance and said direction to said at least one neighboring device relative to said device comprised in a car.

14. A method as claimed in claim 13, wherein the step of determining (21) at least one of a distance and a direction to at least one neighboring device relative to a device said device comprised in a car comprises the step of determining (35) a depth map from said distance and said direction to said at least one neighboring device relative to said device comprised in a car.

15. A computer program or suite of computer programs comprising at least one software code portion or a computer program product storing at least one software code portion, the software code portion, when run on a computer system of a device comprised in a car according to claim 1, causes the device to carry out the method of any one of claims 11 to 14.

**Patentansprüche**

1. Fahrzeug, umfassend eine Vorrichtung (1) zur Kommunikation mit mindestens einer benachbarten Vorrichtung (11), wobei die im Fahrzeug (1) beinhaltete Vorrichtung umfasst:

> mindestens eines von einem Sender (3) zum Senden eines Datensignals an mindestens eine benachbarte Vorrichtung (11) und einem Empfänger (5) zum Empfangen eines Datensignals von mindestens einer benachbarten Vorrichtung (11); und **gekennzeichnet durch**

einen Prozessor (7), der dafür ausgelegt ist, mindestens eines vom einem Abstand und einer Richtung zu mindestens einer benachbarten Vorrichtung relativ zur im Fahrzeug beinhalteten Vorrichtung (1) zu bestimmen, wobei das mindestens eine vom Abstand und der Richtung unter Verwendung mindestens eines Sensors (9), der sich vom Empfänger (5) unterscheidet, bestimmt wird, um mindestens eines vom Sender (3) und dem Empfänger (5) in Abhängigkeit vom mindestens einen vom Abstand und der Richtung auszulegen und das mindestens eine vom Sender (3) und dem Empfänger (5) zu verwenden, wobei der Sender (3) verwendet wird, um ein Datensignal zu mindestens einer der mindestens einen benachbarten Vorrichtung (11) zu senden, und der Empfänger (5) verwendet wird, um ein Datensignal von mindestens einer der mindestens einen benachbarten Vorrichtung (11) zu empfangen.

2. Fahrzeug nach Anspruch 1, wobei der Prozessor (7) dafür ausgelegt ist, einen Abstand zur mindestens einen benachbarten Vorrichtung relativ zur im Fahrzeug beinhalteten Vorrichtung (1) zu bestimmen und den Sender (3) dafür auszulegen, seine Leistung in Abhängigkeit vom Abstand zur mindestens einen benachbarten Vorrichtung (11) relativ zur Vorrichtung (1) anzupassen.

3. Fahrzeug nach einem der Ansprüche 1 bis 2, wobei der Prozessor (7) dafür ausgelegt ist, eine Richtung zu mindestens einer benachbarten Vorrichtung relativ zur im Fahrzeug beinhalteten Vorrichtung (1) zu bestimmen und das mindestens eine vom Sender (3) und dem Empfänger (5) dafür auszulegen, seine Richtwirkung in Abhängigkeit von der Richtung zur mindestens einen benachbarten Vorrichtung (11) relativ zur Vorrichtung (1) anzupassen.

4. Fahrzeug nach einem der Ansprüche 1 bis 3, wobei die im Fahrzeug beinhaltete Vorrichtung (1) den mindestens einen Sensor (9) umfasst.

5. Fahrzeug nach einem der Ansprüche 1 bis 4, wobei der mindestens eine Sensor (9) mindestens eines von LIDAR, Radar, Sonar, Bilderkennung, strukturiertem Licht und 3D-Vision verwendet, um das mindestens eine vom Abstand und der Richtung zur mindestens einen benachbarten Vorrichtung (11) relativ zur im Fahrzeug beinhalteten Vorrichtung (1) zu bestimmen.

6. Fahrzeug nach einem der Ansprüche 1 bis 5, wobei der Prozessor (7) dafür ausgelegt ist, einen Abstand und eine Richtung zur mindestens einen benachbarten Vorrichtung (11) relativ zur im Fahrzeug beinhalteten Vorrichtung (1) zu bestimmen.

7. Fahrzeug nach Anspruch 6, wobei der Prozessor (7) ferner dafür ausgelegt ist, eine Tiefenkarte aus dem Abstand und der Richtung zur mindestens einen benachbarten Vorrichtung (11) relativ zur im Fahrzeug beinhalteten Vorrichtung (1) zu bestimmen.

8. Fahrzeug nach einem der Ansprüche 1 bis 7, wobei der Prozessor (7) ferner dafür ausgelegt ist, mindestens eines von einer Bewegungsgeschwindigkeit und einer Bewegungsrichtung der mindestens einen benachbarten Vorrichtung (11) relativ zur im Fahrzeug beinhalteten Vorrichtung (1) zu bestimmen und das mindestens eine vom Sender (3) und dem Empfänger (5) in Abhängigkeit vom mindestens einen von der Bewegungsgeschwindigkeit und der Bewegungsrichtung auszulegen.

9. Fahrzeug nach einem der Ansprüche 1 bis 8, wobei das mindestens eine vom Sender (3) und dem Empfänger (5) mit einem Array (13) von Antennen (17a-g) gekoppelt ist.

10. Fahrzeug nach einem der Ansprüche 1 bis 9, wobei der Prozessor (7) ferner dafür ausgelegt ist, eine Wetterlage zu bestimmen und das mindestens eine vom Sender (3) und dem Empfänger (5) in Abhängigkeit von der Wetterlage auszulegen.

11. Verfahren zur Kommunikation von einer in einem Fahrzeug beinhalteten Vorrichtung zu mindestens einer benachbarten Vorrichtung, **dadurch gekennzeichnet, dass** es die folgenden Schritte umfasst:

Bestimmen (21) von mindestens einem von einem Abstand und einer Richtung zur mindestens einen benachbarten Vorrichtung, wobei das mindestens eine vom Abstand und der Richtung unter Verwendung von mindestens einem Sensor bestimmt wird, der sich von einem Empfänger unterscheidet, der von der in einem Fahrzeug beinhalteten Vorrichtung verwendet wird, um ein Datensignal von der mindestens einen benachbarten Vorrichtung zu empfangen;

Auslegen (23) des mindestens einen von einem Sender und dem Empfänger in Abhängigkeit vom mindestens einen vom Abstand und der Richtung; und

Verwenden (25) des mindestens einen vom Sender und dem Empfänger, wobei der Sender verwendet wird (26), um ein Datensignal von der in einem Fahrzeug beinhalteten Vorrichtung zu mindestens einer der mindestens einen benachbarten Vorrichtung zu senden, und der Empfänger verwendet wird (27), um ein Datensignal von mindestens einer der mindestens einen benachbarten Vorrichtung an der Vorrichtung zu empfangen.

12. Verfahren nach Anspruch 11, wobei der mindestens eine Sensor mindestens eines von LIDAR, Radar, Sonar, Bilderkennung, strukturiertem Licht und 3D-Vision verwendet, um das mindestens eine vom Abstand und der Richtung zur mindestens einen benachbarten Vorrichtung relativ zur in einem Fahrzeug beinhalteten Vorrichtung (1) zu bestimmen.

13. Verfahren nach einem der Ansprüche 11 bis 12, wobei der Schritt des Bestimmens (21) von mindestens einem von einem Abstand und einer Richtung zu mindestens einer benachbarten Vorrichtung relativ zur in einem Fahrzeug beinhalteten Vorrichtung das Bestimmen des Abstands und der Richtung zur mindestens einen benachbarten Vorrichtung relativ zur in einem Fahrzeug beinhalteten Vorrichtung umfasst.

14. Verfahren nach Anspruch 13, wobei der Schritt des Bestimmens (21) von mindestens einem von einem Abstand und einer Richtung zur mindestens einen benachbarten Vorrichtung relativ zur in einem Fahrzeug beinhalteten Vorrichtung den Schritt des Bestimmens (35) einer Tiefenkarte aus dem Abstand und der Richtung zur mindestens einen benachbarten Vorrichtung relativ zur in einem Fahrzeug beinhalteten Vorrichtung umfasst.

15. Computerprogramm oder eine Reihe von Computerprogrammen, umfassend mindestens einen Softwarecodeabschnitt oder ein Computerprogrammprodukt, das mindestens einen Softwarecodeabschnitt speichert, wobei der Softwarecodeabschnitt bei seiner Ausführung auf einem Computersystem einer in einem Fahrzeug beinhalteten Vorrichtung nach Anspruch 1 die Vorrichtung veranlasst, das Verfahren nach einem der Ansprüche 11 bis 14 durchzuführen.

**Revendications**

1. Voiture comprenant un dispositif (1) pour communiquer avec au moins un dispositif voisin (11), le dispositif compris dans la voiture (1) comprenant :

   au moins l'un d'un émetteur (3) pour transmettre un signal de données à au moins un dispositif voisin (11) et un récepteur (5) pour recevoir un signal de données en provenance d'au moins un dispositif voisin (11) ; et **caractérisé par**
   un processeur (7) configuré pour déterminer au moins l'une d'une distance et d'une direction d'au moins un dispositif voisin par rapport audit dispositif (1) compris dans la voiture,
   ladite au moins une de ladite distance et de ladite direction étant déterminée au moyen d'au moins un capteur (9) autre que ledit récepteur (5), pour configurer au moins l'un dudit au moins un dudit émetteur (3) et dudit récepteur (5) en fonction de ladite au moins une de ladite distance et de ladite direction, et pour utiliser ledit au moins un dudit émetteur (3) et dudit récepteur (5), ledit émetteur (3) étant utilisé pour transmettre un signal de données à au moins l'un dudit au moins un dispositif voisin (11) et ledit récepteur (5) étant utilisé pour recevoir un signal de données en provenance d'au moins l'un dudit au moins un dispositif voisin (11).

2. Voiture selon la revendication 1, dans laquelle ledit processeur (7) est configuré pour déterminer une distance dudit au moins un dispositif voisin par rapport audit dispositif (1) compris dans la voiture et pour configurer ledit émetteur (3) pour adapter sa puissance en fonction de ladite distance dudit au moins un dispositif voisin (11) par rapport audit dispositif (1).

3. Voiture selon l'une quelconque des revendications 1 à 2, dans laquelle ledit processeur (7) est configuré pour déterminer une direction de l'au moins un dispositif voisin par rapport audit dispositif (1) compris dans la voiture et pour configurer ledit au moins un dudit émetteur (3) et dudit récepteur (5) pour adapter sa directivité en fonction de ladite direction dudit au moins un dispositif voisin (11) par rapport audit dispositif (1).

4. Voiture selon l'une quelconque des revendications 1 à 3, dans laquelle ledit dispositif (1) compris dans la voiture comprend ledit au moins un capteur (9).

**5.** Voiture selon l'une quelconque des revendications 1 à 4, dans laquelle ledit au moins un capteur (9) utilise au moins l'un d'un LIDAR, d'un radar, d'un sonar, d'une reconnaissance d'image, d'une lumière structurée et d'une vision 3D pour déterminer ladite au moins une de ladite distance et de ladite direction dudit au moins dispositif voisin (11) par rapport audit dispositif (1) compris dans la voiture.

**6.** Voiture selon l'une quelconque des revendications 1 à 5, dans laquelle ledit processeur (7) est configuré pour déterminer une distance et une direction dudit au moins un dispositif voisin (11) par rapport audit dispositif (1) compris dans la voiture.

**7.** Voiture selon la revendication 6, dans laquelle ledit processeur (7) est en outre configuré pour déterminer une carte de profondeur à partir de ladite distance et de ladite direction dudit au moins un dispositif voisin (11) par rapport audit dispositif (1) compris dans la voiture.

**8.** Voiture selon l'une quelconque des revendications 1 à 7, dans laquelle ledit processeur (7) est configuré pour déterminer au moins l'une d'une vitesse de déplacement et d'une direction de déplacement dudit au moins un dispositif voisin (11) par rapport audit dispositif (1) compris dans la voiture et pour configurer ledit au moins un dudit émetteur (3) et dudit récepteur (5) en fonction de ladite au moins une de ladite vitesse de déplacement et de ladite direction de déplacement.

**9.** Voiture selon l'une quelconque des revendications 1 à 8, dans laquelle ledit au moins un dudit émetteur (3) et dudit récepteur (5) est couplé à un réseau (13) d'antennes (17a-g).

**10.** Voiture selon l'une quelconque des revendications 1 à 9, dans laquelle ledit processeur (7) est en outre configuré pour déterminer une condition météorologique et pour configurer ledit au moins un dudit émetteur (3) et dudit récepteur (5) en fonction de ladite condition météorologique.

**11.** Procédé de communication d'un dispositif compris dans une voiture vers au moins un dispositif voisin, **caractérisé en ce qu'**il comprend les étapes de :

détermination (21) d'au moins l'une d'une distance et d'une direction de l'au moins un dispositif voisin, ladite au moins une de ladite distance et de ladite direction étant déterminée au moyen d'au moins un capteur autre qu'un récepteur utilisé par le dispositif compris dans une voiture pour recevoir un signal de données en provenance dudit au moins un dispositif voisin,
configuration (23) d'au moins l'un d'un émetteur et dudit récepteur en fonction de ladite au moins une de ladite distance et de ladite direction ; et
utilisation (25) dudit au moins un dudit émetteur et dudit récepteur, ledit émetteur étant utilisé (26) pour transmettre un signal de données dudit dispositif compris dans une voiture vers au moins l'un dudit au moins un dispositif voisin et ledit récepteur étant utilisé (27) pour recevoir un signal de données en provenance d'au moins l'un dudit au moins un dispositif voisin sur ledit dispositif.

**12.** Procédé selon la revendication 11, dans lequel ledit au moins un capteur utilise au moins l'un d'un LIDAR, d'un radar, d'un sonar, d'une reconnaissance d'image, d'une lumière structurée et d'une vision 3D pour déterminer ladite au moins une de ladite distance et de ladite direction dudit au moins dispositif voisin par rapport audit dispositif (1) compris dans la voiture.

**13.** Procédé selon l'une quelconque des revendications 11 à 12, dans lequel l'étape de détermination (21) d'au moins l'une d'une distance et d'une direction d'au moins un dispositif voisin par rapport audit dispositif compris dans une voiture comprend la détermination de ladite distance et de ladite direction dudit au moins un dispositif voisin par rapport audit dispositif compris dans une voiture.

**14.** Procédé selon la revendication 13, dans lequel l'étape de détermination (21) d'au moins l'une d'une distance et d'une direction d'au moins un dispositif voisin par rapport à un dispositif compris dans une voiture comprend l'étape de détermination (35) d'une carte de profondeur à partir de ladite distance et de ladite direction dudit au moins un dispositif voisin par rapport audit dispositif compris dans une voiture.

**15.** Programme informatique ou suite de programmes informatiques comprenant au moins une partie de code logiciel ou un produit de programme informatique stockant au moins une partie de code logiciel, la partie de code logiciel, lorsqu'elle est exécutée sur un système informatique d'un dispositif compris dans une voiture selon la revendication 1, amenant le dispositif à exécuter le procédé selon l'une quelconque des revendications 11 à 14.

Fig. 1

Fig. 2

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100214085 A
- US 2014086191 A1
- US 2007054617 A1

### Non-patent literature cited in the description

- Autonomous reconfiguration and control in directional mobile ad hoc networks. **MILNER S. et al.** IEEE Circuits and Systems Magazine. IEEE Service Center, 01 April 2009, vol. 9, 10-26
- **B.D. VAN VEEN et al.** Beamforming: A Versatile Approach to Spatial Filtering. *IEEE ASSP Magazine,* April 1988